# EUROPEAN PATENT SPECIFICATION

(11) **EP 3 321 477 B1**
(45) Date of publication and mention of the grant of the patent: **27.03.2019**
(21) Application number: 17173067.4
(22) Date of filing: 26.05.2017
(51) Int. Cl.: F01L 1/02, F01M 9/10, F16H 7/18

(54) **MOTORCYCLE**
MOTORRAD
MOTOCYCLETTE

(30) Priority: 09.11.2016 JP 2016219018; 21.11.2016 JP 2016225719
(43) Date of publication of application: 16.05.2018
(73) Proprietor: Yamaha Hatsudoki Kabushiki Kaisha, Iwata-shi Shizuoka 438-8501 (JP)
(72) Inventor: HASHIMOTO, Hideaki, Iwata-shi, Shizuoka 438-8501 (JP); IIDA, Kaichi, Iwata-shi, Shizuoka 438-8501 (JP); MIZUNO, Masayuki, Iwata-shi, Shizuoka 438-8501 (JP)
(74) Representative: Grünecker Patent- und Rechtsanwälte PartG mbB

(56) References cited:
- JP-A- H03 213 609
- JP-A- 2009 074 387
- JP-U- S 607 447
- JP-U- H0 561 549
- JP-U- S60 100 512
- TW-A- 200 535 325
- US-A1- 2011 277 726

## Description

The present invention relates to a motorcycle.

Motorcycles provided with an internal combustion engine including a valve train therein are known in the art. A valve train includes, for example, an intake valve and an exhaust valve, a cam that drives the intake valve and the exhaust valve via a rocker arm, a cam shaft on which the cam is provided, a cam chain that links together the cam shaft and a crank shaft of an internal combustion engine, and a chain guide that guides the cam chain. The valve train is lubricated with oil.
Prior art document TW 200535325 A discloses a motorcycle engine device with a cylinder body being arranged substantially upright with a small inclination in forward direction. Said engine is provided with a lubrication structure for cam chain guide sheet. The motorcycle engine device is sequentially assembled with a cylinder head, the cylinder body and a crank box, and a camshaft chain is wound therein. The side of the camshaft chain is featured with a chain guide sheet. The upper part of the chain guide sheet is configured with an oil guide hole capable of connecting to an oil return hole of the cylinder head. With such a design, the lubrication oil in the cylinder head can flow back to the oil guide hole via the oil return hole, and then automatically flow downward to the whole chain guide sheet by its own gravity via the oil guide hole, thereby achieving the purpose of lubricating the junction between the chain guide sheet and camshaft chain.

Japanese Patent Publication for Opposition No. 64-3764 discloses an internal combustion engine in which the top portion of a cylinder head cover is placed above a chain guide, and discloses an oil supply structure in which a portion of the cylinder head cover above the chain guide is provided with a rib as a lubricant oil receiver. Scattered oil is received by the rib and falls off the rib onto the chain guide. Thus, oil is supplied to the chain guide, lubricating the cam chain.

Japanese Laid-Open Patent Publication No. 2015-169158 discloses an oil supply structure in which a portion of the cylinder head above the intake valve is provided with a rib. Scattered oil is received by the rib and falls onto the intake valve. Thus, the intake valve is lubricated.

As an internal combustion engine installed on a motorcycle, an internal combustion engine is known in the art that is placed so that the cylinder axis extends forward. That is, internal combustion engines are known in the art, in which the angle formed between the cylinder axis and the horizontal line is small, as the vehicle is seen from the side. In such an internal combustion engine, the cylinder head is placed forward of the cylinder body, and the cylinder head cover is placed forward of the cylinder head. The cam chain and the chain guide are placed so as to extend in the vehicle front-rear direction. In order to desirably lubricate the cam chain and the chain guide, it is effective to supply oil to the vicinity of an end portion of the chain guide that is opposite to the moving direction of the cam chain. This is because since the supplied oil is guided, together with the cam chain, in the moving direction of the cam chain, the cam chain and the chain guide are easily lubricated entirely.

With such an internal combustion engine, the top portion of the cylinder head cover is placed forward of the chain guide. Therefore, when the oil supply structure disclosed in Japanese Patent Publication for Opposition No. 64-3764 is employed, oil cannot be allowed to fall off the rib onto the chain guide. Therefore, the oil supply structure disclosed in Japanese Patent Publication for Opposition No. 64-3764 cannot be employed.

Document JP H 03213609 A discloses a motorcycle and the oil injection apparatus of the engine.

One may consider, instead of providing a rib on the top portion of the cylinder head cover, providing a rib on a portion of the inner wall of the cylinder head or the cylinder head cover that is above the chain guide. In such a case, however, a sprocket fixed to the cam shaft will be present between the rib and the chain guide, and oil cannot be allowed to desirably fall off the rib onto the chain guide. The oil supply structure disclosed in Japanese Laid-Open Patent Publication No. 2015-169158 is a structure that allows oil to be fall off the rib onto the intake valve, and is not capable of supplying oil to the cam chain and the chain guide.

It is an object of the present invention to provide a motorcycle including an internal combustion engine placed so that the cylinder axis extends forward, with which oil can be desirably guided onto the chain guide, thereby desirably lubricating the cam chain. According to the present invention said object is solved by a motorcycle including an internal combustion engine having the features of independent claim 1. Preferred embodiments are laid down in the dependent claims.

A motorcycle includes: a crankcase accommodating a crank shaft therein; a cylinder body connected to the crankcase with a cylinder formed in the cylinder body; a cylinder head connected to the cylinder body, with an intake valve and an exhaust valve attached to the cylinder head; a cam shaft rotatably supported on the cylinder head; an intake cam and an exhaust cam provided on the cam shaft and configured to drive the intake valve and the exhaust valve, respectively; a first sprocket provided at one end portion of the cam shaft; a second sprocket provided on the crank shaft; a cam chain wound around the first sprocket and the second sprocket; and a chain guide placed under the cam chain, wherein: the cylinder is placed so that an axis of the cylinder extends forward as the vehicle is seen from the side. The cylinder head includes a circumferential wall portion and a central portion placed inside the circumferential wall portion, with the intake valve, the exhaust valve and the cam shaft attached to the central portion. The central portion includes an oil gutter placed below a center of the cam shaft and outward of an outline of the first sprocket, as the vehicle is seen from the side, with the oil gutter deviating downward while extending toward the chain guide. The chain guide includes a main body portion supporting the cam chain, a side portion located between the main body portion and the oil gutter, and a guide rib extending upward from the side portion toward the oil gutter.

In the motorcycle set forth above, the central portion of the cylinder head includes the oil gutter. Oil having lubricated the cam shaft, the intake valve or the exhaust valve is guided by the oil gutter toward the chain guide. Since the chain guide includes the guide rib extending upward toward the oil gutter, oil having fallen off the oil gutter is guided by the guide rib onto the side portion of the chain guide to be supplied to the main body portion. With the motorcycle set forth above, since oil is supplied from the central portion of the cylinder head to the chain guide, oil can be desirably guided to the chain guide, thereby desirably lubricating the cam chain, as compared with a case where oil is supplied to the chain guide via a rib provided on the circumferential wall portion of the cylinder head. Note that since the oil gutter is placed outward of the outline of the first sprocket, as the vehicle is seen from the side, oil is supplied from the oil gutter to the chain guide without being interfered by the first sprocket. Since the guide rib is provided on the side portion, rather than the main body portion, of the chain guide, the guide rib will not interfere with the assembly when the cam chain is wound around the first sprocket and the second sprocket. Desirable lubrication of the cam chain is realized without complicating the operation of assembling the cam chain.

According to a preferred embodiment, the central portion of the cylinder head includes a wall placed between the intake cam and the exhaust cam and the first sprocket, and the wall supports the cam shaft. The wall includes therein an oil passage hole leading to the oil gutter.

According to the embodiment set forth above, oil having lubricated the cam shaft, the intake valve or the exhaust valve flows onto the oil gutter via the oil passage hole to be guided to the chain guide.

According to another preferred embodiment, there is a gap in the up-down direction between the guide rib and the oil gutter.

According to the embodiment set forth above, it is possible to reduce collision between the guide rib and the oil gutter due to the vibration of the internal combustion engine. Therefore, it is possible to reduce deterioration of the guide rib and the oil gutter. It is also possible to reduce noise due to such collision.

According to another preferred embodiment, the cylinder head includes a vertical rib that projects from a distal end of the oil gutter and extending in an up-down direction.

According to the embodiment set forth above, oil on the oil gutter is likely to fall down via the vertical rib. Therefore, it is possible to smoothly supply oil from the oil gutter to the chain guide.

According to another preferred embodiment, the oil gutter includes a bottom wall and a vertical wall extending upward from the bottom wall. The bottom wall is inclined from a horizontal line so that the bottom wall deviates downward while extending toward the vertical wall, as the vehicle is seen from the side. The vertical rib is provided at a distal end of the vertical wall.

According to the embodiment set forth above, oil is likely to collect in a portion of the bottom wall that is closer to the vertical wall. Oil can be localized on the oil gutter, and oil is likely to fall down via the vertical rib. Thus, it is possible to more smoothly supply oil from the oil gutter to the chain guide.

According to another preferred embodiment, the oil gutter includes a bottom wall whose distal end portion projects from the central portion of the cylinder head.

Since oil is a fluid having a high viscosity, oil on the oil gutter tends to be stuck on the wall surface below the oil gutter of the central portion of the cylinder head. According to the embodiment set forth above, however, the distal end portion of the bottom wall of the oil gutter is projecting from the central portion of the cylinder head, and oil is therefore likely to fall off the oil gutter. Therefore, it is possible to smoothly supply oil from the oil gutter to the chain guide.

According to the present invention, it is possible to provide a motorcycle including an internal combustion engine placed so that the cylinder axis extends forward, with which oil can be desirably guided onto the chain guide, thereby desirably lubricating the cam chain.

### BRIEF DESCRIPTION OF THE DRAWINGS

FIG. 1 is a side view of a motorcycle according to a preferred embodiment.
FIG. 2 is a vertical cross-sectional view of a power unit.
FIG. 3 is a cross-sectional view taken along line III-III of FIG. 2.
FIG. 4 shows a cylinder head as seen from the front side along the cylinder axis.
FIG. 5 is a perspective view of the cylinder head.
FIG. 6 is a perspective view of a chain guide.
FIG. 7 is a plan view of the chain guide.
FIG. 8 is a right side view of the chain guide.
FIG. 9 shows, on an enlarged scale, the vicinity of a guide rib shown in FIG. 5.
FIG. 10 is a cross-sectional view taken along line X-X of FIG. 2.

### DETAILED DESCRIPTION OF THE PREFERRED EMBODIMENTS

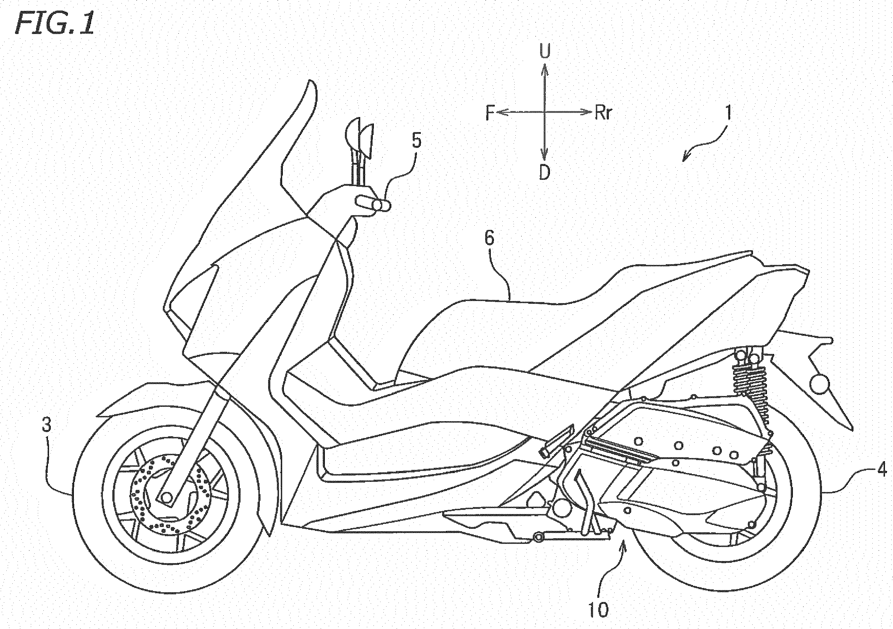

A motorcycle according to a preferred embodiment will now be described with reference to the drawings. As shown in FIG. 1, a motorcycle 1 of the present embodiment is a scooter-type motorcycle. The motorcycle 1 includes a vehicle body frame (not shown), a front wheel 3, a rear wheel 4, a handle 5, a seat 6, and a power unit 10. The power unit 10 is pivotally supported on the vehicle body frame via a pivot shaft (not shown).

The terms front, rear, left, right, up and down, as used in the description below, refer to these directions as seen from a virtual rider (not shown) seated on the seat 6 while assuming that the motorcycle 1 is standing upright on a horizontal surface with no load thereon, unless specified otherwise. Note that "no load" means that there is no rider on the motorcycle 1 and the motorcycle 1 has no fuel. The designations F, Rr, L, R, U and D, as used in the figures, refer to front, rear, left, right, up and down, respectively. The term "front" means the front direction in the vehicle front-rear direction. The term "rear" means the rear direction in the vehicle front-rear direction.

The term "front" is not limited to the horizontal forward direction, but is inclusive of any inclined direction that is in the range of -45° to +45° with respect to the horizontal forward direction, unless specified otherwise. Similarly, the term "rear" is not limited to the horizontal rearward direction, but is inclusive of any inclined direction that is in the range of -45° to +45° with respect to the horizontal rearward direction. The term "left" is not limited to the leftward direction in the vehicle width direction, but is inclusive of any inclined direction that is in the range of -45° to +45° with respect to that direction. The term "right" is not limited to the rightward direction in the vehicle width direction, but is inclusive of any inclined direction that is in the range of -45° to +45° with respect to that direction. The term "up" is not limited to the vertical upward direction, but is inclusive of any inclined direction that is in the range of - 45° to +45° with respect to the vertical upward direction. The term "down" is not limited to the vertical downward direction, but is inclusive of any inclined direction that is in the range of -45° to +45° with respect to the vertical downward direction.

A front portion of an object refers to a portion that is forward of the middle of the object in the vehicle front-rear direction, unless specified otherwise. A rear portion of an object refers to a portion that is rearward of the middle of the object in the vehicle front-rear direction. An upper portion of an object refers to a portion that is upward of the middle of the object in the up-down direction. A lower portion of an object refers to a portion that is downward of the middle of the object in the up-down direction. A left portion of an object refers to a portion that is leftward of the middle of the object in the left-right direction. A right portion of an object refers to a portion that is rightward of the middle of the object in the left-right direction. Note that the left-right direction is equal to the vehicle width direction.

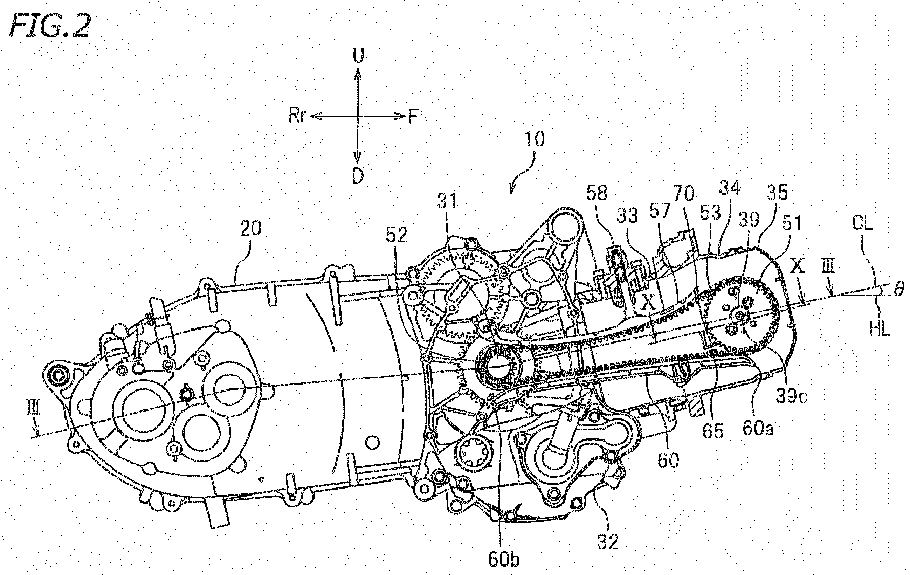

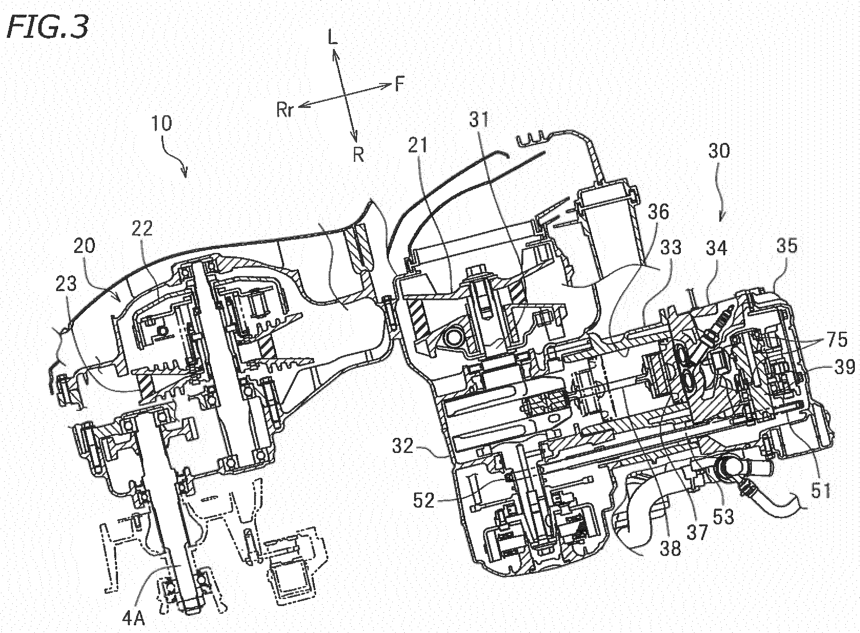

FIG. 2 is a vertical cross-sectional view of the power unit 10. FIG. 3 is a cross-sectional view taken along line III-III of FIG. 2. As shown in FIG. 2, the power unit 10 is placed so that the cylinder axis CL extends forward, as the vehicle is seen from the side. The angle θ formed between the cylinder axis CL and the horizontal line HL is set to be 45 degrees or less, as the vehicle is seen from the side. Note that the angle θ as used herein refers to an acute one of the angles formed between the cylinder axis CL and the horizontal line HL, as the vehicle is seen from the side. Thus, in the present embodiment, the angle θ of the power unit 10 is set to be relatively small. In an alternative example value of θ may be 0 degree to 30 degrees, 0 degree to 15 degrees, or 0 degree to 10 degrees.

As shown in FIG. 3, the power unit 10 includes an internal combustion engine 30 and a V-belt continuously variable transmission 20.

The continuously variable transmission 20 includes a driving pulley 21, a driven pulley 22, and a V belt 23 wound around the driving pulley 21 and the driven pulley 22. Note that FIG. 2 shows different states for the right half and the left half for each of the driving pulley 21 and the driven pulley 22. The driving pulley 21 is linked to a crank shaft 31 of the internal combustion engine 30. The driven pulley 22 is linked to an axle 4A of the rear wheel 4 via a gear (not shown).

The internal combustion engine 30 includes a crankcase 32 accommodating the crank shaft 31 therein, a cylinder body 33 connected to the crankcase 32, a cylinder head 34 connected to the cylinder body 33, and a cylinder head cover 35 connected to the cylinder head 34. The cylinder body 33 is placed forward of the crankcase 32. The cylinder head 34 is placed forward of the cylinder body 33. The cylinder head cover 35 is placed forward of the cylinder head 34.

The crank shaft 31 extends in the vehicle width direction. A cylinder 36 is formed inside the cylinder body 33. The cylinder 36 may be integral with, or separate from, the cylinder body 33. Note that the cylinder axis CL is a virtual line passing through the center of the cylinder 36. A piston 37 is placed inside the cylinder 36. The piston 37 and the crank shaft 31 are linked together by a connecting rod 38.

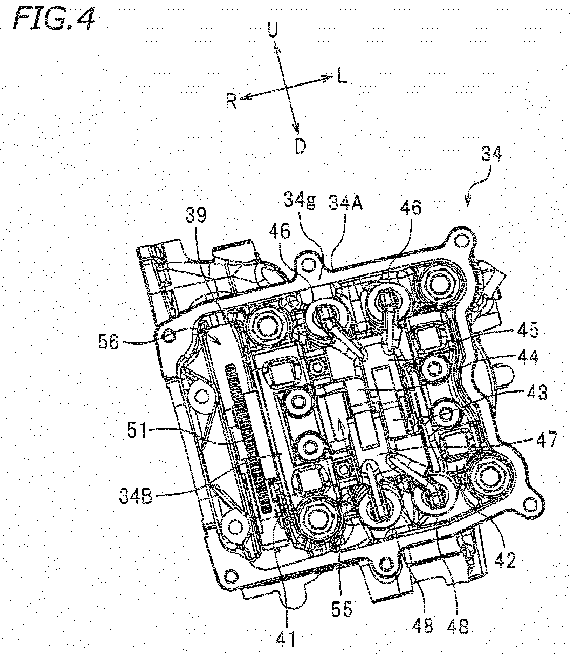

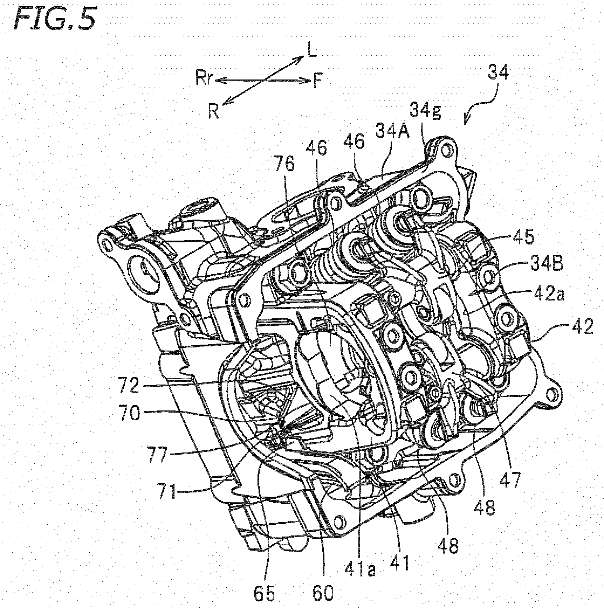

FIG. 4 shows the cylinder head 34 as seen from the front side along the cylinder axis CL. FIG. 5 is a perspective view of the cylinder head 34. As shown in FIG. 5, the cylinder head 34 includes a circumferential wall portion 34A and a central portion 34B. The circumferential wall portion 34A is a portion of the cylinder head 34 that defines the external wall, and is a portion that can be viewed from outside. A front end surface 34g of the circumferential wall portion 34A is a mating surface to be in contact with the rear end surface of the cylinder head cover 35. The cylinder head 34 is connected to the cylinder head cover 35 with the front end surface 34g of the circumferential wall portion 34A being mated with the rear end surface of the cylinder head cover 35. As shown in FIG. 4, the central portion 34B is a portion that is placed inside the circumferential wall portion 34A. As seen from the direction along the cylinder axis CL, the central portion 34B is spaced apart from the front end surface 34g of the circumferential wall portion 34A.

As shown in FIG. 5, the central portion 34B includes a wall 41 and a wall 42. The wall 41 and the wall 42 are arranged next to each other in the vehicle width direction. The wall 41 has a hole 41a formed therein, and the wall 42 has a hole 42a formed therein. A cam shaft 39 (see FIG. 3) passes through the hole 41a and the hole 42a. The cam shaft 39 extends in the vehicle width direction, and is rotatably supported on the wall 41 and the wall 42 via a bearing (not shown). As shown in FIG. 4, an intake cam 43 and an exhaust cam 44 are provided on the cam shaft 39. The intake cam 43 and the exhaust cam 44 are placed between the wall 41 and the wall 42. A rocker arm 45 is in engagement with the intake cam 43, and intake valves 46 are in contact with the rocker arm 45. The intake cam 43 is configured to drive the intake valves 46 via the rocker arm 45. A rocker arm 47 is in engagement with the exhaust cam 44, and exhaust valves 48 are in contact with the rocker arm 47. The exhaust cam 44 is configured to drive the exhaust valves 48 via the rocker arm 47.

As shown in FIG. 3, a first sprocket 51 is provided at one end portion of the cam shaft 39. In the present embodiment, the first sprocket 51 is provided at the right end portion of the cam shaft 39. A second sprocket 52 is provided on the crank shaft 31. An endless cam chain 53 is wound around the first sprocket 51 and the second sprocket 52. The cam shaft 39 is linked to the crank shaft 31 via the first sprocket 51, the cam chain 53 and the second sprocket 52. The cam shaft 39 is configured to be driven to rotate by the crank shaft 31.

As shown in FIG. 4, a valve train chamber 55 and a cam chain chamber 56 are formed inside the cylinder head 34, wherein the intake cam 43,the exhaust cam 44, the intake valves 46 and the exhaust valves 48 are placed in the valve train chamber 55, and the first sprocket 51 and the cam chain 53 are placed in the cam chain chamber 56. The wall 41 is placed between the valve train chamber 55 and the cam chain chamber 56.

As shown in FIG. 2, between the cam shaft 39 and the crank shaft 31, a chain guide 57 is placed over the cam chain 53 and a chain guide 60 is placed under the cam chain 53. The chain guides 57 and 60 are members configured to guide the travel of the cam chain 53. The chain guides 57 and 60 are in contact with the cam chain 53. The cam chain 53 slides against the chain guides 57 and 60. A chain tensioner 58 is attached to the chain guide 57. The chain tensioner 58 pushes the chain guide 57 downward, thereby applying a tension upon the cam chain 53.

There is no particular limitation on the length of the chain guide 60, but a front end 60a of the chain guide 60 is located forward of the rear end of the first sprocket 51 in the present embodiment. The front end 60a of the chain guide 60 is located forward of a center 39c of the cam shaft 39. A rear end 60b of the chain guide 60 is located rearward of the front end of the second sprocket 52. The rear end 60b of the chain guide 60 is located rearward of the center of the crank shaft 31.

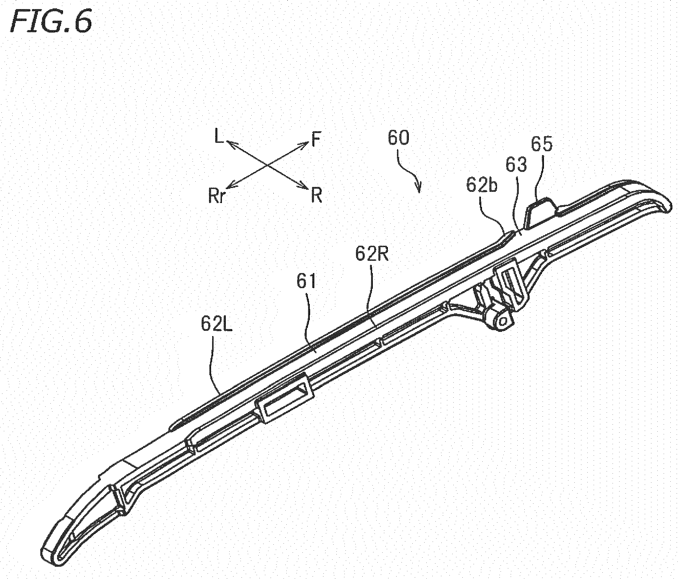

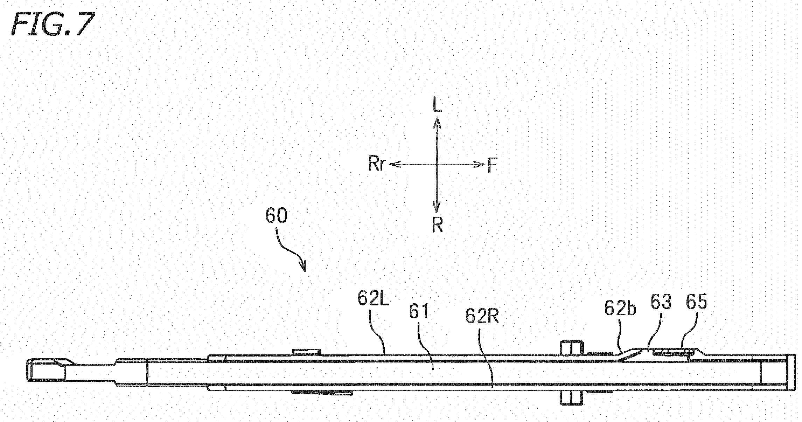

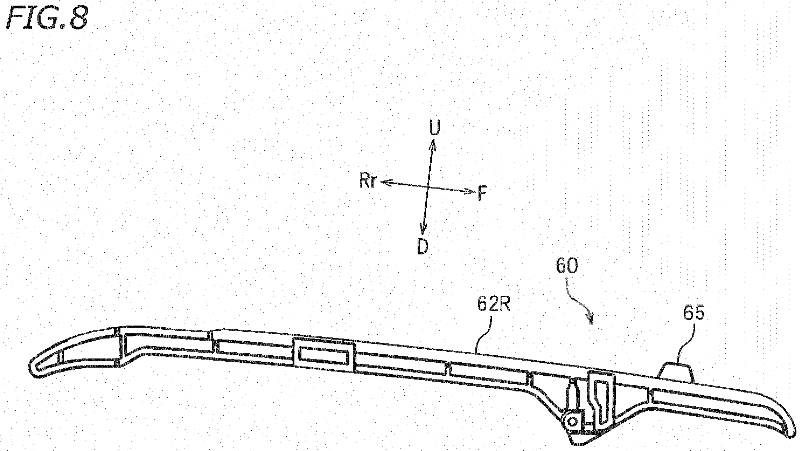

FIG. 6 is a perspective view of the chain guide 60. FIG. 7 is a plan view of the chain guide 60. FIG. 8 is a right side view of the chain guide 60. The chain guide 60 includes a main body portion 61 extending in the vehicle front-rear direction, a left wall portion 62L located leftward of the main body portion 61, and a right wall portion 62R located rightward of the main body portion 61. The main body portion 61 is a portion that supports the cam chain 53. The breadth of the main body portion 61 is generally equal to the breadth of the cam chain 53. The main body portion 61 may be in contact with the circumferential portion of the cam chain 53. The left wall portion 62L and the right wall portion 62R are projecting upward from the main body portion 61. The left wall portion 62L is in contact with the left side portion of the cam chain 53, thus serving to prevent the cam chain 53 from protruding leftward from the main body portion 61. The right wall portion 62R is in contact with the right side portion of the cam chain 53, thus serving to prevent the cam chain 53 from protruding rightward from the main body portion 61. In the present embodiment, the material of the chain guide 60 is a synthetic resin. However, in alternative examples different material of the chain guide 60 can be used.

As shown in FIG. 7, the chain guide 60 includes a side portion 63 located leftward of the main body portion 61. The side portion 63 is provided in the front portion of the chain guide 60. The side portion 63 is projecting leftward from the main body portion 61. A portion 62b of the left wall portion 62L that is located on the side portion 63 is inclined with respect to the vehicle front-rear direction so as to deviate rightward while extending rearward. The side portion 63 is provided with a guide rib 65 extending upward. The guide rib 65 is formed in a plate form extending in the vehicle front-rear direction and in the up-down direction. The guide rib 65 is formed in a trapezoidal shape with the top side being shorter than the bottom side (see FIG. 8). Note however that the shape of the guide rib 65 discussed herein is illustrative example. In alternative examples the shape of the guide rib can be different from the shape of the illustrated example. As shown in FIG. 7, a portion of the left wall portion 62L that is located forward of the guide rib 65 is connected to the guide rib 65 with no interval therebetween. On the other hand, the portion 62b of the left wall portion 62L that is located rearward of the guide rib 65 is not connected to the guide rib 65 with an interval therebetween.

As shown in FIG. 2, the front end portion of the chain guide 60 is configured to guide a portion of the cam chain 53 that is wound around the first sprocket 51 onto the chain guide 60. In order to make the guiding easier, the front end portion of the chain guide 60 is bent so that it deviates downward while extending forward. The rear end portion of the chain guide 60 is configured to guide a portion of the cam chain 53 that is on the chain guide 60 onto the second sprocket 52. The rear end portion of the chain guide 60 is bent so that it deviates downward while extending rearward so that this portion of the cam chain 53 smoothly engages with the second sprocket 52.

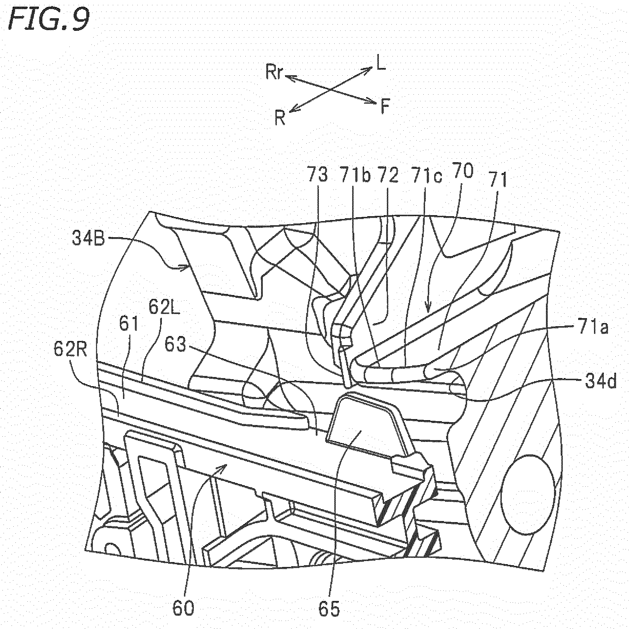

FIG. 9 shows, on an enlarged scale, the vicinity of the guide rib 65 shown in FIG. 5. As shown in FIG. 9, an oil gutter 70 is formed in a portion of the central portion 34B of the cylinder head 34 that is above the guide rib 65. The oil gutter 70 is inclined with respect to the vehicle width direction so that it deviates downward while extending rightward. In other words, the oil gutter 70 is formed in such a shape that it deviates downward while extending toward the chain guide 60. As shown in FIG. 2, the oil gutter 70 is located below the center 39c of the cam shaft 39. The oil gutter 70 is located outward of the outline of the first sprocket 51, as the vehicle is seen from the side. The oil gutter 70 is located rearward of the front end 60a of the chain guide 60 and forward of the middle of the chain guide 60 in the vehicle front-rear direction, as the vehicle is seen from the side. The oil gutter 70 may be placed within one third, one fourth, or one fifth of the total length of the chain guide 60, from the front end 60a of the chain guide 60, as the vehicle is seen from the side. The rear end portion of the first sprocket 51 and at least a portion of the oil gutter 70 overlap with each other as seen from above. At least a portion of the oil gutter 70 is located forward of the rear end of the first sprocket 51. Note however that the placement of the oil gutter 70 discussed herein is illustrative example. In alternative examples different placement can be provided.

As shown in FIG. 9, the guide rib 65 is below and spaced apart from the oil gutter 70. A gap is formed in the up-down direction between the guide rib 65 and the oil gutter 70. Note however that there may be no gap in the up-down direction between the guide rib 65 and the oil gutter 70. The upper end portion of the guide rib 65 may be in contact with the oil gutter 70. The oil gutter 70 may include a bottom wall 71 and a vertical wall 72 extending upward from the bottom wall 71. The vertical wall 72 extends upward from the rear end portion of the bottom wall 71. The bottom wall 71 is inclined from the horizontal line so that it deviates downward while extending toward the vertical wall 72, as the vehicle is seen from the side. A distal end portion 71a of the bottom wall 71 is projecting from the central portion 34B of the cylinder head 34. A recessed portion 34d, which is recessed away from the guide rib 65, is formed below the distal end portion 71a of the bottom wall 71.

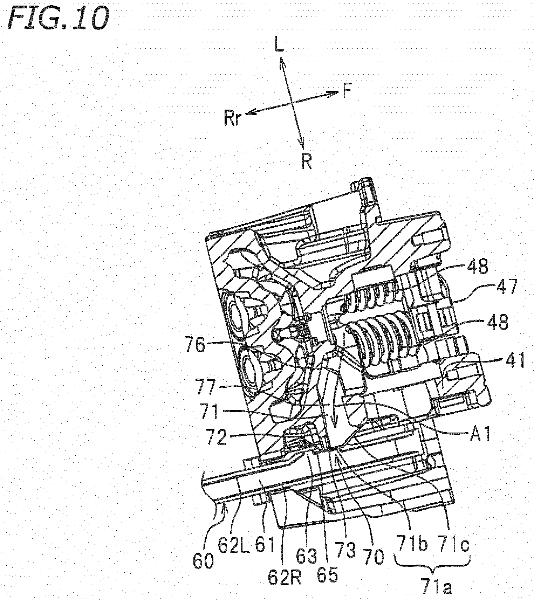

A vertical rib 73 is provided at the distal end of the oil gutter 70. The vertical rib 73 projects from the distal end of the oil gutter 70, extending in the up-down direction. The vertical rib 73 is located outward of the outline of the first sprocket 51, as the vehicle is seen from the side. The vertical rib 73 is located above the guide rib 65. The vertical rib 73 is located so as to overlap with the guide rib 65 as seen from above as shown in FIG. 10. In the present embodiment, the vertical rib 73 is provided at the distal end of the vertical wall 72. In an alternative example the vertical rib 73 may be provided on the bottom wall 71. As shown in FIG. 9, in the present embodiment, the position of the lower end of the vertical rib 73 is higher than the position of the upper end of the guide rib 65. There is a gap in the up-down direction between the vertical rib 73 and the guide rib 65. Note however that there may be no gap between the vertical rib 73 and the guide rib 65.

As shown in FIG. 10, the distal end portion 71a of the bottom wall 71 includes a parallel edge 71b that is parallel to the chain guide 60 and an inclined edge 71c that is inclined from the parallel edge 71b as seen from above. The inclined edge 71c deviates leftward while extending forward. The parallel edge 71b is placed between the vertical wall 72 and the inclined edge 71c. As seen from above, at least a portion of the parallel edge 71b overlaps with the guide rib 65.

As shown in FIG. 3, the cam shaft 39 has an oil passageway 75 therein that allows oil to pass therethrough. Oil in the oil passageway 75 flows out of the cam shaft 39 to be supplied to lubricated positions, e.g., the position where the cam shaft 39 and the bearing slide against each other, the position where the intake cam 43 and the rocker arm 45 contact each other, the position where the exhaust cam 44 and the rocker arm 47 contact each other, the position where the rocker arm 45 and the intake valves 46 contact each other, and the position where the rocker arm 47 and the exhaust valves 48 contact each other. After being supplied to a lubricated position, oil falls off the lubricated position onto a portion 76 in the valve train chamber 55 of the central portion 34B of the cylinder head 34 (see FIG. 5 and FIG. 10).

As shown in FIG. 5 and FIG. 10, the wall 41 has an oil passage hole 77 formed therein configured to connect together the portion 76 and the oil gutter 70. As described above, the wall 41 is placed between the valve train chamber 55 and the cam chain chamber 56. However, since the wall 41 has the oil passage hole 77 leading to the oil gutter 70, oil having fallen off a lubricated position onto the portion 76 is supplied to the oil gutter 70 via the oil passage hole 77, as indicated by arrow A1 in FIG. 10.

Oil on the oil gutter 70 flows rightward. That is, oil on the oil gutter 70 flows toward the chain guide 60. Then, oil on the oil gutter 70 falls off the distal end portion 71a. Although oil is a fluid having a high viscosity, the guide rib 65 is placed below the oil gutter 70 as shown in FIG. 9, and oil hits the guide rib 65 and falls down smoothly on the surface of the guide rib 65. Oil is guided by the guide rib 65 as described above, and oil is therefore smoothly guided from the oil gutter 70 to the chain guide 60. Thus, a sufficient amount of oil is supplied to the chain guide 60 and the cam chain 53.

As described above, in the motorcycle 1 of the present embodiment, the central portion 34B of the cylinder head 34 includes the oil gutter 70. Oil having lubricated the cam shaft 39, the intake valves 46 or the exhaust valves 48, etc., is guided by the oil gutter 70 toward the chain guide 60. Since the chain guide 60 includes the guide rib 65 extending upward toward the oil gutter 70, oil having fallen off the oil gutter 70 is guided by the guide rib 65 onto the side portion 63 of the chain guide 60 to be supplied to the main body portion 61. With the motorcycle 1 of the present embodiment, since oil is supplied from the central portion 34B of the cylinder head 34 to the chain guide 60, oil can be desirably guided to the chain guide 60, thereby desirably lubricating the cam chain 53, as compared with a case where oil is supplied to the chain guide 60 via a rib provided on the circumferential wall portion 34A of the cylinder head 34.

Note that since the oil gutter 70 is placed outward of the outline of the first sprocket 51, as the vehicle is seen from the side, as shown in FIG. 2, oil is supplied from the oil gutter 70 to the chain guide 60 without being interfered by the first sprocket 51.

Since the guide rib 65 is provided on the side portion 63, rather than the main body portion 61, of the chain guide 60, as shown in FIG. 7, the guide rib 65 will not interfere with the assembly of the power unit 10 when the cam chain 53 is wound around the first sprocket 51 and the second sprocket 52. Thus, desirable lubrication of the cam chain 53 is realized without complicating the operation of assembling the cam chain 53.

According to the present embodiment, the wall 41 supporting the cam shaft 39 is placed between the valve train chamber 55 and the cam chain chamber 56, but the wall 41 has the oil passage hole 77 leading to the oil gutter 70. Therefore, as shown in FIG. 10, oil having lubricated the cam shaft 39, the intake valves 46 or the exhaust valves 48, etc., flows onto the oil gutter 70 via the oil passage hole 77 to be guided to the chain guide 60. Thus, it is possible to desirably lubricate the cam chain 53.

According to the present embodiment, there is a gap in the up-down direction between the guide rib 65 and the oil gutter 70, as shown in FIG. 9. Therefore, it is possible to reduce collision between the guide rib 65 and the oil gutter 70 due to the vibration of the internal combustion engine 30. Therefore, it is possible to reduce deterioration of the guide rib 65 and the oil gutter 70. It is also possible to reduce noise due to such collision.

According to the present embodiment, the vertical rib 73 is provided at the distal end of the oil gutter 70. Therefore, oil on the oil gutter 70 is likely to fall down via the vertical rib 73. Thus, it is possible to smoothly supply oil from the oil gutter 70 to the chain guide 60.

According to the present embodiment, the bottom wall 71 is inclined from the horizontal line so that it deviates downward while extending toward the vertical wall 72, as the vehicle is seen from the side. Oil is likely to collect in a portion of the bottom wall 71 that is closer to the vertical wall 72. Thus, oil can be localized on the oil gutter 70. According to the present embodiment, the vertical rib 73 is provided at the distal end of the vertical wall 72. Therefore, oil having been localized on the oil gutter 70 can be guided by the vertical rib 73 to the chain guide 60. Thus, it is possible to smoothly supply oil from the oil gutter 70 to the chain guide 60.

Since oil is a fluid having a high viscosity, oil on the oil gutter 70 tends to be stuck on the wall surface below the oil gutter 70 of the central portion 34B of the cylinder head 34. According to the present embodiment, however, the distal end portion 71a of the bottom wall 71 of the oil gutter 70 is projecting from the central portion 34B of the cylinder head 34. Therefore, oil is likely to fall off the oil gutter 70. Thus, it is possible to smoothly supply oil from the oil gutter 70 to the chain guide 60.

According to the present embodiment, the distal end portion 71a of the bottom wall 71 has the parallel edge 71b that is parallel to the chain guide 60 as seen from above as shown in FIG. 10. It is possible to efficiently supply oil from the bottom wall 71 toward the chain guide 60.

While the cam chain 53 and the chain guide 60 are placed rightward of the cylinder axis CL in the embodiment described above, they may be placed leftward of the cylinder axis CL. In such a case, the first sprocket 51 is provided at the left end portion of the cam shaft 39.

The internal combustion engine 30 is a single-cylinder engine including only one cylinder 36 in the embodiment described above. However, the internal combustion engine 30 may be a multi-cylinder engine including two or more cylinders 36.

The motorcycle 1 is a scooter-type motorcycle in the embodiment described above. However, in alternative examples the motorcycle 1 may be a motorcycle of any other type.

### REFERENCE SIGNS LIST

- 1: Motorcycle
- 31: Crank shaft
- 32: Crankcase
- 33: Cylinder body
- 34: Cylinder head
- 34A: Circumferential wall portion
- 34B: Central portion
- 39: Cam shaft
- 39c: Center of cam shaft
- 43: Intake cam
- 44: Exhaust cam
- 46: Intake valve
- 48: Exhaust valve
- 51: First sprocket
- 52: Second sprocket
- 53: Cam chain
- 60: Chain guide
- 61: Main body portion
- 63: Side portion
- 65: Guide rib
- 70: Oil gutter
- CL: Cylinder axis

## Claims

1. A motorcycle including an internal combustion engine comprising:
a crankcase (32) accommodating a crank shaft (31) therein;
a cylinder body (33) connected to the crankcase (32), with a cylinder (36) formed in the cylinder body (33);
a cylinder head (34) connected to the cylinder body (33), with an intake valve (46) and an exhaust valve (48) attached to the cylinder head (34);
a cam shaft (39) rotatably supported on the cylinder head (34);
an intake cam (43) and an exhaust cam (44) provided on the cam shaft (39) and configured to drive the intake valve (46) and the exhaust valve (48), respectively;
a first sprocket (51) provided at one end portion of the cam shaft (39);
a second sprocket (52) provided on the crank shaft (31);
a cam chain (53) wound around the first sprocket (51) and the second sprocket (52); and
a chain guide (60) placed under the cam chain (53), wherein:
the cylinder (36) is placed so that an axis (CL) of the cylinder (36) extends forward with an angle (θ) formed between the cylinder axis (CL) and a horizontal line (HL) set to be 45 degrees or less as the vehicle is seen from the side;
the cylinder head (34) includes a circumferential wall portion (34A) and a central portion (34B) placed inside the circumferential wall portion (34A), with the intake valve (46), the exhaust valve (48) and the cam shaft (39) attached to the central portion (34B);
the central portion (34B) includes an oil gutter (70) placed below a center (39c) of the cam shaft (39) and outward of an outline of the first sprocket (51), as the vehicle is seen from the side, with the oil gutter (70) deviating downward while extending toward the chain guide (60); and
the chain guide (60) includes a main body portion (61) supporting the cam chain (53), a side portion (63) located between the main body portion (61) and the oil gutter (70), and a guide rib (65) extending upward from the side portion (63) toward the oil gutter (70).

2. The motorcycle according to claim 1, wherein:
the central portion (34B) of the cylinder head (34) includes a wall (41) placed between the intake cam (43) and the exhaust cam (44) and the first sprocket (51), the wall (41) supporting the cam shaft (39); and
the wall (41) includes therein an oil passage hole (77) leading to the oil gutter (70).

3. The motorcycle according to claim 1 or 2, wherein there is a gap in an up-down direction between the guide rib (65) and the oil gutter (70).

4. The motorcycle according to any one of claims 1 to 3, wherein the cylinder head (34) includes a vertical rib (73) that projects from a distal end of the oil gutter (70) and extending in an up-down direction.

5. The motorcycle according to claim 4, wherein:
the oil gutter (70) includes a bottom wall (71) and a vertical wall (72) extending upward from the bottom wall (71);
the bottom wall (71) is inclined from a horizontal line so that the bottom wall (71) deviates downward while extending toward the vertical wall (72), as the vehicle is seen from the side; and
the vertical rib (73) is provided at a distal end of the vertical wall (72).

6. The motorcycle according to any one of claims 1 to 4, wherein the oil gutter (70) includes a bottom wall (71) whose distal end portion (71a) projects from the central portion (34B) of the cylinder head (34).

## Patentansprüche

1. Ein Motorrad, das eine Brenn-Kraft-Maschine mit innerer Verbrennung beinhaltet, umfasst:
ein Kurbel-Gehäuse (32), das darin eine Kurbel-Welle (31) aufnimmt;
einen Zylinder-Körper (33), der mit dem Kurbel-Gehäuse (32) verbunden ist, mit einem Zylinder (36), der in dem Zylinder-Körper (33) ausgebildet ist;
einen Zylinder-Kopf (34), der mit dem Zylinder-Körper (33) verbunden ist, mit einem Einlass-Ventil (46) und einem Auslass-Ventil (48), die an dem Zylinder-Kopf (34) angebracht sind;
eine Nocken-Welle (39), die drehbar in dem Zylinder-Kopf (34) gelagert ist;
einen Einlass-Nocken (43) und einen Auslass-Nocken (44), die auf der Nocken-Welle (39) vorgesehen sind und konfiguriert sind, um jeweils das Einlass-Ventil (46) und das Auslass-Ventil (48) anzutreiben;
ein erstes Ketten-Rad (51), das an einem Endabschnitt der Nocken-Welle (39) vorgesehen ist;
ein zweites Ketten-Rad (52), das an der Kurbel-Welle (31) vorgesehen ist;
eine Nocken-Kette (53), die um das erste Ketten-Rad (51) und das zweite Ketten-Rad (52) gewickelt ist; und
eine Ketten-Führung (60), die unter der Nocken-Kette (53) platziert ist, wobei:
der Zylinder (36) platziert ist, so dass eine Achse (CL) des Zylinders (36) sich nach vorne mit einem Winkel (θ), der zwischen der Zylinder-Achse (CL) und einer Horizontal-Linie (HL) ausgebildet ist, erstreckt, gesetzt um 45 Grad oder weniger zu sein, wenn das Fahrzeug von der Seite betrachtet ist;
der Zylinder-Kopf (34) beinhaltet einen Umfangs-Wand-Abschnitt (34A) und einen Zentral-Abschnitt (34B), der innerhalb des Umfangs-Wand-Abschnitts (34A) platziert ist, mit dem Einlass-Ventil (46), dem Auslass-Ventil (48) und der Nocken-Welle (39), angebracht an dem Zentral-Abschnitt (34B);
der Zentral-Abschnitt (34B) beinhaltet eine Öl-Rinne (70), die unter einer Mitte (39c) der Nocken-Welle (39) und außerhalb von einer Außen-Linie des ersten Ketten-Rads (51) platziert ist, wenn das Fahrzeug von der Seite betrachtet ist, mit der Öl-Rinne (70), die sich nach unten neigt, während sie sich zu der Ketten-Führung (60) erstreckt; und
die Ketten-Führung (60) beinhaltet einen Haupt-Körper-Abschnitt (61), der die Nocken-Kette (53) lagert, einen Seiten-Abschnitt (63), der zwischen dem Haupt-Körper-Abschnitt (61) und der Öl-Rinne (70) positioniert ist, und eine Führungs-Rippe (65), die sich nach oben von dem Seiten-Abschnitt (63) zu der Öl-Rinne (70) erstreckt.

2. Das Motorrad gemäß Anspruch 1, wobei:
der Zentral-Abschnitt (34B) des Zylinder-Kopfs (34) eine Wand (41) beinhaltet, die zwischen dem Einlass-Nocken (43) und dem Auslass-Nocken (44) und dem ersten Ketten-Rad (51) platziert ist, die Wand (41) lagert die Nocken-Welle (39); und
die Wand (41) beinhaltet darin ein Öl-Durchgangs-Loch (77), das zu der Öl-Rinne (70) führt.

3. Das Motorrad gemäß Anspruch 1 oder 2, wobei ein Spalt in einer Oben-Unten-Richtung zwischen der Führungs-Rippe (65) und der Öl-Rinne (70) vorhanden ist.

4. Das Motorrad gemäß irgendeinem der Ansprüche 1 bis 3, wobei der Zylinder-Kopf (34) eine Vertikal-Rippe (73) beinhaltet, die von einem entfernten Ende von der Öl-Rinne (70) vorsteht und sich in eine Oben-Unten-Richtung erstreckt.

5. Das Motorrad gemäß Anspruch 4, wobei:
die Öl-Rinne (70) eine Boden-Wand (71) und eine Vertikal-Wand (72) beinhaltet, die sich nach oben von der Boden-Wand (71) erstreckt;
die Boden-Wand (71) ist von einer Horizontal-Linie geneigt, so dass die Boden-Wand (71) nach unten geneigt ist, während sich diese zu der Vertikal-Wand (72) erstreckt, wenn das Fahrzeug von der Seite betrachtet ist; und
die Vertikal-Rippe (73) ist an einem entfernten Ende der Vertikal-Wand (72) vorgesehen.

6. Das Motorrad gemäß irgendeinem der Ansprüche 1 bis 4, wobei die Öl-Rinne (70) eine Boden-Wand (71) beinhaltet, dessen entfernter End-Abschnitt (71a) von dem Zentral-Abschnitt (34B) des Zylinder-Kopfs (34) vorspringt.

## Revendications

1. Motocyclette comprenant un moteur à combustion interne comportant :
un carter de vilebrequin (32) abritant un vilebrequin (31) ;
un corps de cylindre (33) connecté au carter de vilebrequin (32), un cylindre (36) étant formé dans le corps de cylindre (33) ;
une culasse (34) connectée au corps de cylindre (33), une soupape d'admission (46) et une soupape d'échappement (48) étant attachées à la culasse (34) ;
un arbre à cames (39) monté en rotation sur la culasse (34) ;
une came d'admission (43) et une came d'échappement (44) disposées sur l'arbre à cames (39) et configurées pour entraîner respectivement la soupape d'admission (46) et la soupape d'échappement (48) ;
un premier pignon (51) disposé au niveau d'une partie d'extrémité de l'arbre à cames (39) ;
un second pignon (52) disposé sur le vilebrequin (31) ;
une courroie synchrone (53) enroulée autour du premier pignon (51) et du second pignon (52) ; et
un guide de courroie (60) placé sous la courroie synchrone (53), où :
le cylindre (36) est placé de telle manière qu'un axe (CL) du cylindre (36) s'étend vers l'avant, un angle (θ) formé par l'axe du cylindre (CL) et une ligne horizontale (HL) étant défini comme étant de 45 degrés ou moins dans une vue latérale du véhicule ;
la culasse (34) comprend une partie de paroi circonférentielle (34A) et une partie centrale (34B) placée à l'intérieur de la partie de paroi circonférentielle (34A), la soupape d'admission (46), la soupape d'échappement (48) et l'arbre à cames (39) étant attachés à la partie centrale (34B) ;
la partie centrale (34B) comprend une gouttière d'huile (70) placée sous un centre (39c) de l'arbre à cames (39) et vers l'extérieur d'un contour du premier pignon (51) dans une vue latérale du véhicule, la gouttière d'huile (70) étant déviée vers le bas tout en s'étendant vers le guide de courroie (60) ; et
le guide de courroie (60) comprend une partie de corps principale (61) supportant la courroie synchrone (53), une partie latérale (63) située entre la partie de corps principale (61) et la gouttière d'huile (70), et une nervure de guidage (65) s'étendant vers le haut à partir de la partie latérale (63) vers la gouttière d'huile (70).

2. Motocyclette selon la revendication 1, où :
la partie centrale (34B) de la culasse (34) comprend une paroi (41) placée entre la came d'admission (43) et la came d'échappement (44) et le premier pignon (51), la paroi (41) supportant l'arbre à cames (39) ; et
la paroi (41) comprend un trou de passage de l'huile (77) menant à la gouttière d'huile (70).

3. Motocyclette selon la revendication 1 ou 2, où un espace est prévu dans la direction de haut en bas entre la nervure de guidage (65) et la gouttière d'huile (70).

4. Motocyclette selon l'une quelconque des revendications 1 à 3, où la culasse (34) comprend une nervure verticale (73) qui fait saillie à partir d'une extrémité distale de la gouttière d'huile (70) et s'étend dans la direction de haut en bas.

5. Motocyclette selon la revendication 4, où :
la gouttière d'huile (70) comprend une paroi inférieure (71) et une paroi verticale (72) s'étendant vers le haut à partir de la paroi inférieure (71) ; et
la paroi inférieure (71) est inclinée par rapport à une ligne horizontale de telle manière que la paroi inférieure (71) est déviée vers le bas tout en s'étendant vers la paroi verticale (72), dans une vue latérale du véhicule ; et
la nervure verticale (73) est disposée à une extrémité distale de la paroi verticale (72).

6. Motocyclette selon l'une quelconque des revendications 1 à 4, où la gouttière d'huile (70) comprend une paroi inférieure (71) dont la partie d'extrémité distale (71a) fait saillie à partir de la partie centrale (34B) de la culasse (34).
